# FASCICULE DE BREVET EUROPEEN

(11) **EP 1 039 210 B1**
(45) Date de publication et mention de la délivrance du brevet: **06.07.2005**
(21) Numéro de dépôt: 99105822.3
(22) Date de dépôt: 23.03.1999
(51) Int. Cl.: F16P 3/08

(54) **Dispositif de protection pour machine**
Schutzvorrichtung für Maschine
Safety device for machinery

(43) Date de publication de la demande: 27.09.2000
(73) Titulaire: SOCIETE DES PRODUITS NESTLE S.A., 1800 Vevey (CH)
(72) Inventeur: Richard, Jacques, 1358 Valeyres sous Rances (CH)
(74) Mandataire: Thomas, Alain

(56) Documents cités:
- EP-A- 0 363 810
- DE-A- 19 615 588
- FR-A- 2 245 474
- GB-A- 638 129
- GB-A- 1 534 606
- GB-A- 2 084 279
- GB-A- 2 132 933
- US-A- 3 902 582

## Description

La présente invention se rapporte à la sécurité des machines et plus particulièrement à la sécurité du personnel surveillant et/ou commandant ces machines.

Il existe de nombreuses machines présentant des organes en mouvement pouvant présenter un danger pour le personnel travaillant sur ces machines. De telles machines sont par exemple des presses, des extrudeuses, des machines à moules, des granuleuses, qui toutes comportent des organes se déplaçant, susceptibles de provoquer des accidents si les personnes se servant de ces machines ont la possibilité d'accéder aux zones dangereuses de ces machines.

Pour éviter des accidents, on a proposé de prévoir des éléments de protection, grilles, panneaux ou autre organe, déplaçables d'une position inactive pour laquelle l'accès à la machine est autorisé à une position active pour laquelle certaines zones au moins de la machine ne sont plus accessibles. Un dispositif automatique assure que l'alimentation en énergie de la machine soit interrompue dès que l'élément de protection n'est plus en position active.

De tels dispositifs de protection pour machine sont par exemple décrits dans les documents EP 0 363 810; GB 1 534 606; GB 2 084 279; GB 2 132 933, US 3 902 582 et GB 638 129 qui est la base de la revendication 1.

Dans certains types de machines, par exemple les granuleuses, la zone dangereuse de la machine doit pouvoir être observée pendant le fonctionnement de celle-ci, les éléments de protection doivent être soit transparents, soit munis de grilles. Mais durant leur fonctionnement, ces machines projettent des particules contre les éléments de protection les rendant opaques. Pour nettoyer ces éléments de protection, il faut avec les machines actuelles, arrêter la machine puis la redémarrer seulement lorsque l'élément de protection nettoyé est mis en place.

Ceci conduit à des arrêts fréquents et de durée non négligeable de la machine dont la productivité baisse considérablement.

La présente invention a pour but d'assurer la sécurité du personnel travaillant avec une machine tout en évitant les arrêts fréquents de celle-ci pour le nettoyage des éléments de protection.

La présente invention a pour objet un dispositif de protection pour machine obviant aux inconvénients précités et permettant d'atteindre le but énoncé plus haut.

Le dispositif de protection selon l'invention se distingue par les caractéristiques énoncées dans la revendication 1 du présent brevet.

Le dessin annexé illustre schématiquement et à titre d'exemple une granuleuse pour extrudeuse, munie d'un dispositif de protection selon l'invention.

La figure 1 est une vue en perspective de la granuleuse, l'extrudeuse étant retirée, munie du dispositif de protection selon l'invention en position de marche normale.

La figure 2 est une vue semblable à la figure 1 pendant l'opération de remplacement d'un élément de protection sale par un propre sans que la machine ait besoin d'être arrêtée.

La figure 3 est un schéma simplifié de l'alimentation électrique de la machine.

La figure 4 est un détail du dispositif de protection vu en plan.

La figure 5 est un détail du dispositif de protection vu en élévation.

Dans la forme d'exécution illustrée, la machine équipée du dispositif de protection selon l'invention est une granuleuse comportant une chambre de granulation 1 logée à l'intérieur d'un bâti 2 comprenant sur deux faces opposées des flasques 3,4. Sur l'une 3 de ces flasques est fixé un moteur 5 dont l'arbre rotatif 6 porte un couteau 7 disposé dans la chambre de granulation 1. Sur l'autre flasque 4 vient se fixer une extrudeuse (non illustrée) permettant d'extruder à l'intérieur de la chambre de granulation un boudin de matière extrudée qui est tranché en petits morceaux ou granules par le couteau 7.

La chambre de granulation 1 est fermée sur trois côtés par le bâti 2 et ouverte sur sa partie supérieure. Cette ouverture supérieure est obturée par une grille 8 amovible. Cette grille 8 comporte des poignées de préhension 9 et coulisse, perpendiculairement à l'axe 6 du moteur 5, dans des glissières 10 parallèles et solidaires du bâti 2. La grille 8 peut ainsi être mise en place pour obturer l'ouverture supérieure de la chambre de granulation par coulissement latéral.

Le dispositif de protection comprenant la grille 8 et les glissières 10 comporte encore deux interrupteurs 11,11a, normalement ouverts dont les organes de commande sont ici formés par des roulettes 13 pivotées sur un bras oscillant 14. Les interrupteurs 11,11a sont montés sur le bâti 2 de telle sorte que les roulettes 13 soient chacune disposée dans le prolongement d'une glissière 10 et située approximativement sur une diagonale de l'ouverture de la chambre de granulation 1.

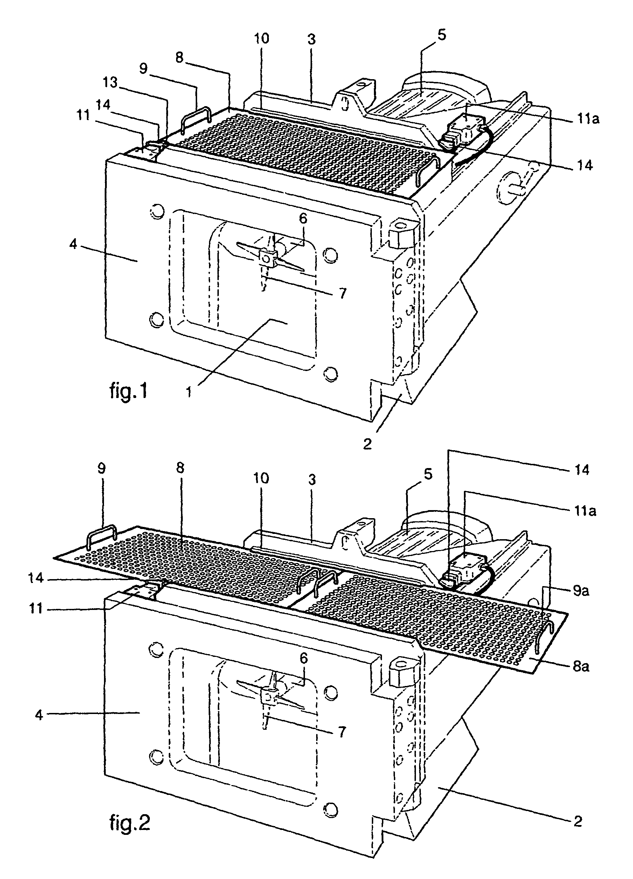

Ainsi, lorsque la grille de protection 9 est en position de service (figure 1), les deux interrupteurs 11, 11a sont fermés, les roulettes 13 étant toutes deux refoulées par une tranche latérale de la grille 8.

Le positionnement des deux interrupteurs 11,11a par rapport à l'ouverture du bâti 2 est tel que lorsque les deux interrupteurs sont actionnés par la grille 8, celle-ci obture totalement ladite ouverture.

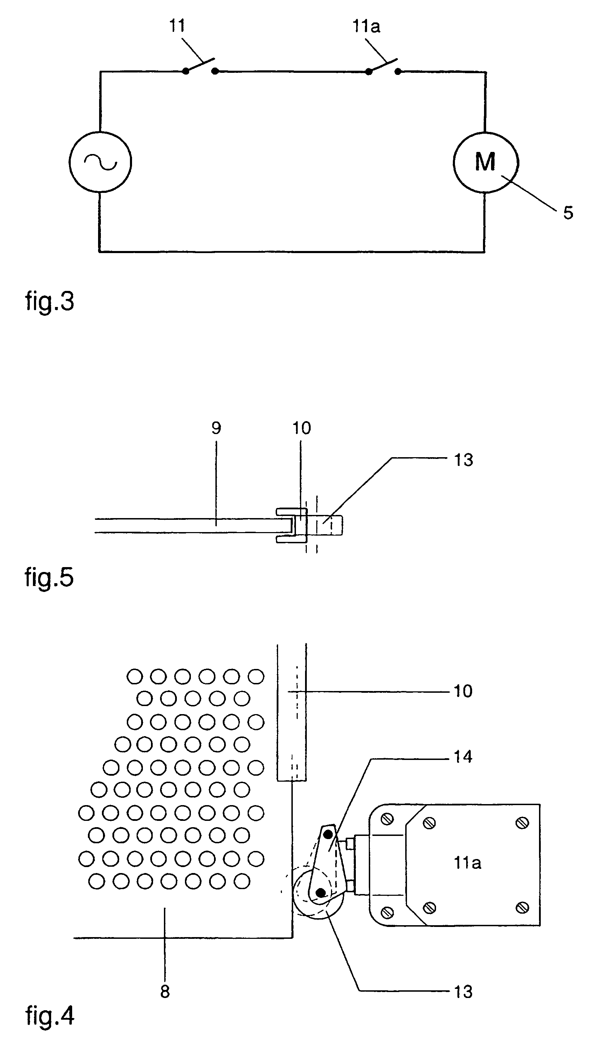

Les interrupteurs 11,11a sont montés en série dans le circuit d'alimentation du moteur 5 (figure 3) de sorte qu'il suffit que l'un des interrupteurs 11,11a soit ouvert par un léger déplacement transversal de la grille 8 dans un sens ou dans l'autre pour que le moteur 5 s'arrête assurant une sécurité totale du personnel.

Lorsque la grille 8 est souillée et qu'il faut la retirer pour son nettoyage, il n'est pas besoin d'arrêter la machine. En effet, comme on le voit sur la figure 2, il suffit de pousser latéralement la grille 8 à l'aide d'une seconde grille identique 8a. Pendant le changement de grille, les deux interrupteurs 11 et 11a restent fermés, l'un actionné par la grille 8 et l'autre par la grille 8a puis lorsque la grille 8a arrive en position active de service, elle actionne les deux interrupteurs 11 et 11a. La grille 8 est ainsi libérée et peut être nettoyée.

Grâce à ce dispositif de protection pour machine comportant les glissières 10, les interrupteurs 11 et 11a et les grilles 8,8a il est possible de remplacer une grille de protection 8 par une nouvelle grille de protection 8a sans stopper la machine et sans aucun danger pour le personnel.

Pour faciliter l'échange de grille 8 un support peut être fixé sur le bâti 2 pour recevoir la grille 8 lorsqu'elle est poussée par la grille 8a.

Dans une variante, les interrupteurs 11,11a peuvent être montés à proximité des extrémités opposées de la même glissière 10.

Bien entendu, le dispositif de protection décrit et illustré peut être prévu pour obturer une ouverture ou protéger une zone dangereuse située dans un plan oblique ou vertical, plutôt qu'horizontal comme illustré.

Il est évident également que la machine devant être équipée d'une protection peut être de n'importe quel type, ce n'est qu'à titre d'exemple que le dispositif de protection a été décrit en relation avec une granuleuse.

Par ailleurs, les glissières 10 ne sont pas obligatoirement continues sur toute la longueur des bords de l'ouverture a protéger. Des sections discontinues des glissières peuvent être prévues, pour autant qu'il ne soit pas possible de retirer la grille 8 autrement que par translation rectiligne.

On peut également envisager l'obturation d'ouvertures ou de surfaces courbes. Pour ce cas, les glissières 10 épousent deux bords opposés de l'ouverture et la grille 8 ou élément de protection, peut être de forme ou même flexible pour épouser la forme de l'ouverture à obturer.

Les éléments de protection peuvent être pleins et non pas ajourés, ils peuvent être transparents ou translucides. Ces éléments de protection peuvent être métalliques ou en matière synthétique rigide ou flexible.

Enfin, il est évident que si la machine dispose de plusieurs moteurs, ceux-ci peuvent tous être alimentés par l'intermédiaire des interrupteurs 11,11a pour obtenir un arrêt total de la machine dès que l'un de ceux-ci est ouvert.

## Revendications

1. Dispositif de protection d'une zone dangereuse d'une machine, qui comporte deux glissières parallèles disposées le long de deux côtés de cette zone dangereuse; deux interrupteurs normalement ouverts, branchés en série dans l'alimentation électrique, d'au moins un moteur de la machine, l'un de ces interrupteurs étant placé à proximité d'une extrémité d'une des glissières tandis que l'autre est placé à proximité de l'extrémité opposée d'une des glissières et encore un élément de protection coulissant dans lesdites glissières et dont la longueur est telle qu'en position de service, cet élément de protection actionne les organes de commande des deux interrupteurs pour fermer ceux-ci, **caractérisé par le fait que** l'élément de protection est amovible et peut être échangé pour le nettoyage par un autre élément de protection par déplacement dans les glissières sans que la machine soit arrêtée.

2. Dispositif selon la revendication 1, **caractérisé par le fait que** les glissières et les interrupteurs sont fixés sur le bâti de la machine.

3. Dispositif selon l'une des revendications 1 ou 2, **caractérisé par le fait que** l'élément de protection est un élément métallique ajouré.

4. Dispositif selon l'une des revendications 1 ou 2, **caractérisé par le fait que** l'élément de protection est rigide.

5. Dispositif selon l'une des revendications 1 ou 2, **caractérisé par le fait que** l'élément de protection est flexible.

6. Dispositif selon l'une des revendications précédentes, **caractérisé par le fait que** chaque interrupteur comporte un organe d'actionnement disposé dans le prolongement d'une glissière et sur le chemin d'un bord latéral de l'élément de protection coulissant.

7. Dispositif selon l'une des revendications précédentes, **caractérisé par le fait que** les interrupteurs sont placés à proximité des extrémités opposées de la même glissière.

8. Dispositif selon l'une des revendications 1 à 6, **caractérisé par le fait que** l'un des interrupteurs est placé à proximité d'une extrémité d'une glissière et que l'autre interrupteur est placé à proximité de l'extrémité opposée de l'autre glissière.

9. Dispositif selon l'une des revendications précédentes, **caractérisé par le fait que** lorsque l'élément de protection actionne les deux interrupteurs simultanément, elle obture totalement la zone dangereuse.

## Patentansprüche

1. Schutzvorrichtung fur eine Gefahrenzone einer Maschine, die zwei längs zweier Seiten dieser Gefahrenzone angeordnete, zueinander parallele Gleitführungen und zwei normalerweise offene Schalter aufweist, die in der Stromversorgung mindestens eines Motors der Maschine in Reihe geschaltet sind, wobei einer der Schalter in Nähe eines Endes einer der Gleitfuhrungen angeordnet ist, während der andere in Nahe des entgegengesetzten Endes einer der Gleitführungen angeordnet ist, sowie ein in den Gleitführungen verschiebbares Schutzelement, dessen Länge so gewählt ist, dass es in Betriebsstellung die Steuerorgane der beiden Schalter betätigt, um diese zu schließen, **dadurch gekennzeichnet, dass** das Schutzelement abnehmbar ist und zu Reinigungszwecken durch Verschiebung in den Gleitfuhrungen gegen ein anderes Schutzelement ausgetauscht werden kann, ohne dass die Maschine abgeschaltet wird.

2. Vorrichtung nach Anspruch 1, **dadurch gekennzeichnet, dass** die Gleitführungen und die Schalter an dem Rahmen der Maschine befestigt sind.

3. Vorrichtung nach einem der Ansprüche 1 oder 2, **dadurch gekennzeichnet, dass** das Schutzelement ein durchbrochenes Element aus Metall ist.

4. Vorrichtung nach einem der Ansprüche 1 oder 2, **dadurch gekennzeichnet, dass** das Schutzelement starr ist.

5. Vorrichtung nach einem der Ansprüche 1 oder 2, **dadurch gekennzeichnet, dass** das Schutzelement flexibel ist.

6. Vorrichtung nach einem der vorhergehenden Ansprüche, **dadurch gekennzeichnet, dass** jeder Schalter ein Betätigungsorgan aufweist, das in der Verlängerung einer Gleitführung und in dem Weg eines Seitenrands des verschiebbaren Schutzelements angeordnet ist.

7. Vorrichtung nach einem der vorhergehenden Ansprüche, **dadurch gekennzeichnet, dass** die Schalter in Nähe der einander entgegengesetzten Enden ein und derselben Gleitfuhrung angeordnet sind.

8. Vorrichtung nach einem der Ansprüche 1 bis 6, **dadurch gekennzeichnet, dass** einer der Schalter in Nähe eines Endes einer Gleitfuhrung und der andere Schalter in Nähe des entgegengesetzten Endes der anderen Gleitfuhrung angeordnet ist.

9. Vorrichtung nach einem der vorhergehenden Ansprüche, **dadurch gekennzeichnet, dass** das Schutzelement, wenn es die beiden Schalter gleichzeitig betätigt, die Gefahrenzone vollständig verschließt.

## Claims

1. Device for protection of a dangerous area of a machine, which comprises two parallel slides disposed along two sides of this dangerous area; two switches which are normally open, connected in series in the electrical supply of at least one motor of the machine, one of these switches being placed in the vicinity of one end of one of the slides, while the other switch is placed in the vicinity of the opposite end of one of the slides, and another protection element which slides in the said slides, and the length of which is such that in the service position, this protection element activates the control units of the two switches in order to close the latter, **characterised in that** the protection element is removable and can be replaced for cleaning by another protection element by displacement in the slides, without the machine being stopped.

2. Device according to claim 1, **characterised in that** the slides and the switches are secured to the frame of the machine.

3. Device according to claim 1 or claim 2, **characterised in that** the protection element is a punched metal element.

4. Device according to claim 1 or claim 2, **characterised in that** the protection element is rigid.

5. Device according to claim 1 or claim 2, **characterised in that** the protection element is flexible.

6. Device according to any one of the preceding claims, **characterised in that** each switch comprises an activation unit which is disposed in the extension of a slide and on the path of a lateral edge of the sliding protection element.

7. Device according to any one of the preceding claims, **characterised in that** the switches are placed in the vicinity of the opposite ends of the same slide.

8. Device according to any one of claims 1 to 6, **characterised in that** one of the switches is placed in the vicinity of one end of one slide, and the other switch is placed in the vicinity of the opposite end of the other slide.

9. Device according to any one of the preceding claims, **characterised in that** when the protection element activates the two switches simultaneously, it shuts off the dangerous area completely.
